# EUROPEAN PATENT SPECIFICATION

(11) **EP 2 489 625 B1**
(45) Date of publication and mention of the grant of the patent: **12.02.2014**
(21) Application number: 12156208.6
(22) Date of filing: 20.02.2012
(51) Int. Cl.: B66C 23/90, B66C 13/40, B66C 23/86

(54) **Mobile crane and method of operating a mobile crane.**
Mobiler Kran und Verfahren zum Betrieb eines mobilen Krans
Grue mobile et son procédé de fonctionnement

(30) Priority: 21.02.2011 NL 2006268
(43) Date of publication of application: 22.08.2012
(73) Proprietor: Reedijk Hydrauliek B.V., 3286 BW Klaaswaal (NL)
(72) Inventor: Reedijk, Dirk, 3286 BW KLAASWAAL (NL); Van der Net, Ramon, 4671 CL DINTELOORD (NL)
(74) Representative: De Weerdt, Robrecht

(56) References cited:
- WO-A1-03/064311
- US-A- 4 057 792
- US-A1- 2010 054 956
- US-B1- 7 677 861

## Description

### FIELD OF THE INVENTION

The invention relates to the field of mobile cranes and more specifically to an improved control of such cranes.

### BACKGROUND OF THE INVENTION

Mobile cranes as known in the art are in general applied on industrial sites, e.g. to install or replace heavy machine components. In general, such cranes can be e.g. be mounted on a truck or can be mounted to a dedicated drive system, e.g. a tracked drive system. In the latter case, such mobile cranes provide the advantage of being comparatively compact thus facilitating the maneuvering of the crane inside a factory to positions that are difficult to reach by conventional cranes in case the factory is crammed with machines and equipment. In practice, using conventional fixed cranes for the installation or replacement of components is often time-consuming and expensive and may obstruct the normal operation of a factory.

Mobile cranes as currently on the market often make use of similar technology or techniques as applied in conventional fixed cranes, e.g. with respect to position control of a load or with respect safety control. Using such conventional approaches may however result in limitations with respect to the obtainable performance of the mobile crane. A mobile crane including a base frame, an extendable arm and a drive unit for positioning the extendable arm and lifting device are e.g. known from NL9401892.

### SUMMARY OF THE INVENTION

It would be desirable to provide a mobile crane having an improved position control of a load. It would also be desirable to provide a mobile crane having an improved performance while maintaining within desired safety margins. It would also be desirable to provide a mobile crane having a more user-friendly control interface.

To better address one or more of these concerns, the present invention provides in a mobile crane comprising:
a. a base frame;
b. an extendable arm that is connected to the base frame;
c. a lifting device, such as a lifting winch, connected to the extendable arm for lifting a load;
d. a drive unit for positioning the extendable arm and lifting device thereby positioning the load, characterized in that the drive unit comprises a hydraulic proportional volume control for controlling a position or velocity of the extendable arm, the hydraulic control applies a non-proportional valve connected to an hydraulic pump wherein the hydraulic pump has a fixed displacement and is driven by an rpm-controlled electromotor for controlling a pumped volume to obtain the proportional volume control.

The present invention describes several distinct aspects which can be applied in a mobile crane. The mobile crane according to the invention comprises a base frame to which an extendable arm is mounted. Such an extendable arm, also referred to as (crane) boom, can e.g. comprise a telescopically extendable arm or boom. Within the meaning of the present invention, an extendible arm may also comprise a pair of pivotal arms. The mobile crane further comprises a lifting device, mounted to the extendable arm to which a load can be connected. As such, the lifting device can e.g. be a lifting winch or a lifting hook pivotably mounted to an end of the extendable arm.

In order to position the load, the mobile crane further comprises a drive unit for positioning the extendable arm. In an embodiment, the drive unit can e.g. comprise an hydraulic pump for positioning the arm, whereby the hydraulic pump can e.g. be driven by an electromotor such as an rpm controlled electromotor.

In an embodiment, the mobile crane further comprises:
- a control unit for controlling the drive unit; wherein the control unit is arranged to in use:
   i. determine a bending of the extendable arm, the base frame or an outrigger of the crane, or a combination thereof;
   ii. control the drive unit to adjust a position of the extendable arm in order to at least partly compensate for a displacement of the load due to the bending.
The mobile crane according to this embodiment of the invention similarly comprises a base frame, an extendable arm, a lifting device and a drive unit as explained above. In accordance with the embodiment, a more accurate position control of a load is obtained by at least partly compensating for displacements of the load due to bending of the extendable arm, the base frame or an outrigger, or a combination thereof, of the mobile crane. In order to realize this, a control unit of the mobile crane is arranged to determine a bending of these components. The bending can e.g. be determined based on calculations and/or measurements.

In an embodiment, the bending of the extendable arm, the base frame or the outrigger of the crane can be determined by experiments thus obtaining a bending characteristic for the crane e.g. describing the bending as a function of load and load position. Using such characteristic, which can e.g. be stored in a memory unit of the control unit, the control unit can determine an actual bending for a giving load condition. Note that such a load condition may e.g. be determined from feedback from e.g. pressure signals from transducers in outriggers connected to the crane's base frame.

In an embodiment, the bending can be derived from measurements during the actual loading of the crane, e.g. using measurements from strain sensors or loadcells mounted to the extendable arm.

In accordance with an embodiment of the invention, the control unit is further arranged to control the drive unit to adjust the position of the extendable arm to at least partly compensate the bending effect. Note that the bending of the arm may affect the vertical position of the load and also the horizontal position of the load.

In an embodiment, the mobile crane further comprises:
- a wireless receiver for receiving a control signal for controlling the drive unit and providing the control signal to the drive unit; and
- a remote control system comprising:
   i. a user interface for generating a set point representing a desired position or displacement of the load;
   ii. a docking area for receiving a mobile processing device and in use, connecting the mobile processing device to the user interface to provide the set point to the mobile processing device,
wherein the remote control system is further arranged to, in use, provide the control signal to the receiver.
The mobile crane according to this embodiment of the invention comprises a remote control system for controlling the operation of the crane. According to the embodiment of the invention, the remote control system enables to apply a conventional mobile processing device to be used in combination with a user interface for controlling the crane. As an example, the remote control system of the crane according to the embodiment of the invention comprises a docking area which can e.g. receive a portable computer, e.g. an industrial PC, a PDA or any other mobile processing device, thereby providing a connection between the user interface of the remote control system and an input port of the processing device. In such arrangement, the user interface, e.g. comprising one or more joy-sticks or handles or rotatable knobs, can be applied by the operator to provide a set point to the portable computer, in general the mobile processing device, whereupon the portable computer can process the set point, e.g. convert it to a control signal for the drive unit of the mobile crane. The set point as generated by the user interface can e.g. represent a desired position or a desired velocity or movement/displacement of the mobile crane or the crane boom. In an embodiment, the control signal may subsequently be transmitted to a receiver of the mobile crane using a transmitter available on the portable computer. The transmission may be realized using any available wireless communication on the mobile processing device, such as Bluetooth. Alternatively, the user interface of the remote control system can be provided with a transmitter for transmitting the control signal to the receiver. In such arrangement, the control signal as determined by the mobile processing device is provide to the user interface, e.g. via an output port of the mobile processing device, and subsequently transmitted to the receiver.

In an embodiment, the drive unit comprises an electrical servomotor for driving the lifting winch. The application of a servomotor for controlling a lifting winch position enables a more accurate positioning of the load which is hardly affected by the load itself. Further, the application of a servomotor enables to hold a load at a desired vertical position, without the need to engage a mechanical brake. As such, by using the servomotor, a mechanical brake need only be provided for safety purposes.

In an embodiment, an orbital transmission is provided for connecting the servomotor to the lifting winch.

These and other aspects of the invention will be more readily appreciated as the same becomes better understood by reference to the following detailed description and considered in connection with the accompanying drawings in which like reference symbols designate like parts.

### BRIEF DESCRIPTION OF THE DRAWINGS

Figure 1 schematically depicts a first embodiment of a mobile crane according to the invention.
Figure 2 schematically depicts a second embodiment of a mobile crane according to the invention.
Figure 3 schematically depicts a top view of a mobile crane according to the invention including a possible outrigger arrangement.
Figure 4a schematically depicts a third embodiment of a mobile crane according to the invention.
Figure 4b schematically depicts an embodiment of a remote control system as can be applied in a mobile crane according to the invention.
Figure 5 schematically depicts a fourth embodiment of a mobile crane according to the invention,

### DETAILED DESCRIPTION OF EMBODIMENTS

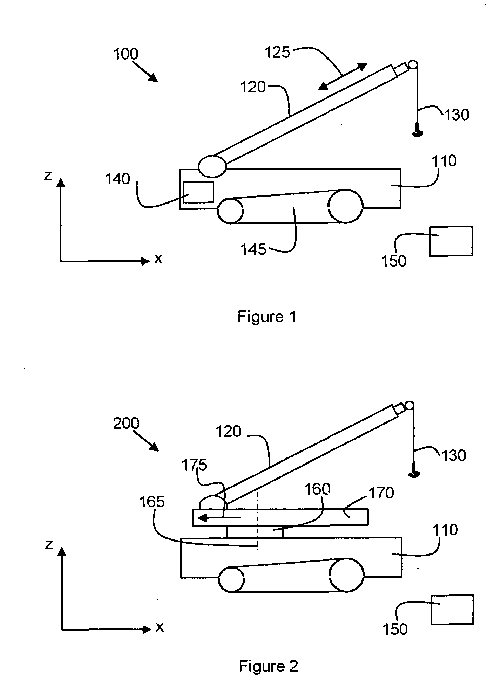

Figure 1 highly schematically depicts a first embodiment of a mobile crane 100 according to the invention. The mobile crane comprises a base frame 110 to which an extendable arm or crane boom 120 is coupled. In the embodiment as shown, the extendable arm is directly coupled to the base frame 110. It is however worth noting that an indirect coupling, e.g. via a pivotable platform or a displaceable or non-displaceable counterweight, can be considered as well. With respect to the extendable arm or crane boom 120, it is worth mentioning that various arrangements of such boom are possible:
- the extendable arm 120 can e.g. be arranged to rotate about an axis perpendicular to the XZ-plane as shown in the Figure and/or can be arranged to extend along the direction indicated by the arrow 125.
- the extendable arm 120 may comprise a first boom connected to the base frame in a substantially vertical direction and a second boom connected to the first boom and extending in a substantially horizontal position.
- the extendable arm 120 may comprise two booms that are foldable relative to the base frame and to each other.

The mobile crane as shown further comprises a lifting device 130, which can e.g. comprise a lifting winch e.g. comprising a cable and a lifting hook, as schematically shown. Not however that other arrangements are possible as well; the lifting device 130 may also comprise a clamping tool for clamping a load or a vacuum suction tool for holding a load. The lifting device may also be directly coupled to an end portion of the extendable arm 120 instead of being at a cable end. The mobile crane further comprises a drive unit 140 which can be mounted to any suitable position to the base frame 110 or, if present, to e.g. a counterweight. The drive unit can e.g. be an hydraulic drive unit e.g. comprising one or more hydraulic cylinders driven by one or more hydraulic pumps.

In an embodiment of the mobile crane according to the invention, such an hydraulic pump is driven by an rpm-controlled electromotor, such as a servomotor. In such embodiment, it may be advantageous to provide the crane with a build-in diesel generator for generating the electrical power required for powering the electromotor. The embodiment as shown in Figure 1 further comprises a drive system 145 for displacing the crane. Such a drive system can e.g. be, as shown, a track drive system or may by a more convention 4-wheel drive system. Alternatively, the mobile crane need not be provided with a drive system but is e.g. mounted to a truck.

The mobile crane as shown in Figure 1 further comprises a control unit 150 for controlling the drive unit 140, thereby thus controlling the position of the load and/or crane boom 120. In accordance with the present invention, a control unit can e.g. comprise a controller or microprocessor for processing data such as user input data (received via a user interface of e.g. a remote control system) and convert the input data to control signals for controlling the drive unit. As such, a control unit can e.g. comprise a memory unit for storing characteristic data about the crane and a computational or processing unit for processing the data. As an example, the control unit 150 can comprise a PLC based controller or control system communicating with the drive unit 140 via a CAN bus and with a user interface (not shown in Figure 1) via a wireless communication protocol, e.g. Bluetooth.

In Figure 2, a second embodiment of a mobile crane according to the invention is schematically shown. Compared to the mobile crane 100 as shown in Figure 1, the mobile crane 200 of Figure 2 further comprise a pivot platform 160 connecting the base frame 110 and a counter mass or counterweight 170 to which the crane boom 120 is connected. Using the pivot platform 160, the counterweight 170 and extendable arm 120 can be rotated about a substantially vertical axis 165. In an embodiment, the counterweight 170 can be made displaceable relative tot the pivot platform 160 (and thus the base frame 120) in the direction as indicated by the arrow 175, thereby extending the operating range of the crane. Note that, as mentioned above, the drive unit (not shown) for driving the crane boom 120 may be mounted or connected to the counterweight 170. In such arrangement, the pivot platform 160 can e.g. be driven by an orbit motor or the like of the drive unit (not shown).

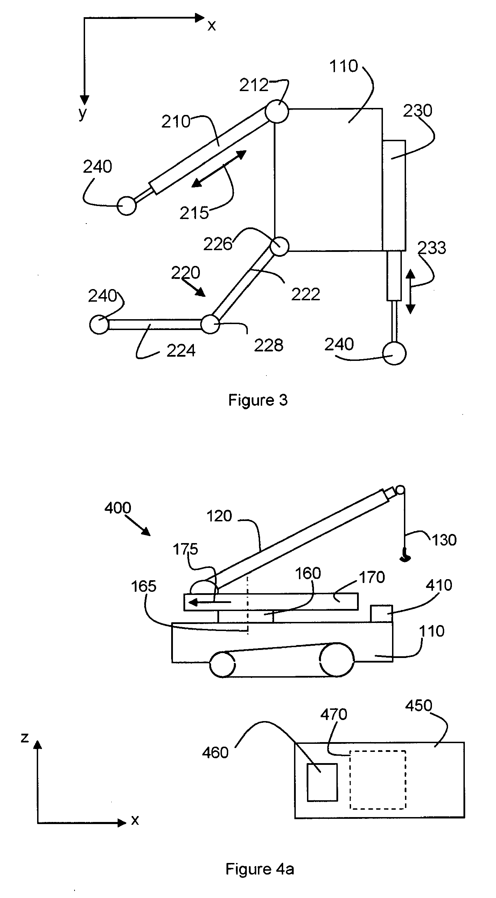

In an embodiment, the mobile crane according to the invention comprises a plurality of outriggers (preferable 3 or more) for stabilizing the crane during normal operation. Such outriggers can e.g. be pivotably mounted to the base frame. The outriggers can e.g. be (telescopically) extendable or comprise a folding construction of two or more arms. In Figure 3, some possible outriggers which can be applied in a mobile crane according to the invention are schematically shown. Figure 3 schematically shows a top view (in the horizontal XY plane) of a base frame 110 of a mobile crane according to the invention. In Figure 3, three different outriggers 210, 220 and 230 are shown which can be applied:
- the outrigger 210 is an outrigger that is pivotally connected to the base frame (at point 212) and which can be extended in a direction as indicated by the arrow 215;
- the outrigger 220 comprises two arms 222 and 224 that can pivot in the XY plane about pivot points 226 and 228;
- The outrigger 230 is rigidly fixed to the base frame 110 and can be extended in a direction as indicated by the arrow 233.
The outriggers as shown may comprise at end an outrigger foot 240, e.g. comprising an hydraulic cylinder which can e.g. be used to adjust a vertical position of the outrigger and thus of the base frame 110. In an embodiment, the outrigger foot can comprise a force measuring circuit or a pressure sensing device such as a pressure sensor or a loadcell for converting a pressure of force into a signal which can be provided to the control unit 150 (see figures 1 and 2) of the mobile crane according to the invention. In accordance with the present invention, the drive unit of the mobile crane comprises a hydraulic proportional volume control for controlling a position or velocity of the extendable arm, the hydraulic control applies a non-proportional valve connected to an hydraulic pump wherein the hydraulic pump has a fixed displacement and is driven by an rpm-controlled electromotor for controlling a pumped volume to obtain the proportional volume control.

In accordance with an aspect not covered by the present invention, the control unit 150 of any of the mobile cranes as described in the Figures 1 to 3 is enables the mobile crane to have an improved lift capacity, while maintaining safe or stable operation. In order to realize this, the control unit is arranged to in use repeatedly determine a position of a center of gravity of the mobile crane combined with the load. Preferably, this is done several times per second. Further, the control unit is arranged to compare the position of the center of gravity as determined with a safe operating range or boundary. Such a safe operating range or boundary may equally be determined repeatedly (at the same or similar rate as the determination of the center of gravity). In known cranes, a maximum load is of described in relationship to a predefined set-up of the crane, i.e. a set-up including a predefined minimal location of the outriggers of the crane. In such a situation, the load capacity is in general determined, calculated for the most unfavorable position/orientation of the load. Such an approach may however result in an unnecessary limitation of the load capacity. Further, it is often noticed that the predefined set-up of the crane (to which the maximum load is referred to) may be difficult to realize in practice, e.g. due to the presence of obstacles, e.g. fixed machinery or installation in a factory.

Using the mobile crane according to this aspect enables to optimize the maximum load capacity, for any set-up of the crane. In such arrangement, the safe operating range can e.g. be determined based on an actual position of supporting points of the crane. During normal operation, the supporting points can e.g. correspond to the outrigger feet 240 as shown in Figure 3. In such arrangement, the mobile crane according to the invention may be provided with a measurement system for measuring a position of the outrigger feet 240, e.g. relative to a reference position on the base frame 110. As an example, the position of the outrigger feet can be determined from the applied pivot angles and/or extension of the outriggers 210, 220 and 230 as shown in Figure 3. As such, based on the actual safe operating area or boundary that can be repeatedly determined, a comparison can be made with an actual center of gravity of the mobile crane. In general, the center of gravity of the mobile crane + load is affected by different factors such as, weight and weight distribution of the base frame, position and weight of the outriggers (when applied), position and weight of a counterweight (if applied), position and weight of the crane boom, e.g. the extendable arm 120 as shown in Figures 1 and 2. Based on the outcome of the comparison, the control unit 150 of the mobile crane can control the drive unit 140 of the crane. As an example, when the center of gravity approaches a boundary of the safe operating area, the control unit may provide in a reduction of the speed at which the crane boom displaces, or may maintain a position. The approach as described above may also be applied in case the mobile crane or the outriggers of the crane are not deployed. Such a situation often occurs when a mobile crane is used to displace a load by driving the crane to a different location. In such a situation, the supporting points of the crane may e.g. correspond to the points at which a drive system 145 of the crane (e.g. a track drive system or a 4-wheel drive system) supports the crane on the ground. Safe operation of a mobile crane may be enhanced significantly if the stability in such an operating mode is examined as indicated. In this respect, it is worth noting that known cranes often only provide maximum load information for situations whereby a minimum outrigger position is applied. As such, when the outriggers are not applied, no maximum load information is available or can be relied on.

In order to determine the actual position of the center of gravity of the crane + load various options exist. As a first example, the center of gravity can be calculated by the control unit based on characteristic data about the crane such as weight, weight distribution of the crane and load and, when applied, the one or more outriggers or counterweight. As a second example, the position of the center of gravity can e.g. be calculated based on measurements, e.g. pressure or force measurements of the supporting points of the crane, e.g. the outrigger feet 240 of the crane. A combination of both methods may also be applied.

In accordance with an embodiment of the present invention, there is provided a mobile crane enabling a more accurate position control of the load, taking into account a bending of the crane boom or other components of the crane..

In accordance with the embodiment of the present invention, a control unit such as control unit 150 as shown in Figures 1 or 2 is arranged to determine a bending of the extendable arm and control the drive unit to adjust a position of the extendable arm in order to at least partly compensate for a displacement of the load due to the bending. Depending on the orientation of the extendable arm, a bending of the arm can affect both a vertical and a horizontal position of the load. The bending of the crane boom can e.g. be determined based on calculations and/or measurements.

In an embodiment, the bending of the extendable arm of the crane can be determined by during a calibration test thus obtaining a bending characteristic for the crane e.g. describing the bending as a function of load and load position. Using such characteristic, which can e.g. be stored in a memory unit of the control unit, the control unit can determine an actual bending for a giving load condition. Note that such a load condition may e.g. be determined from feedback from e.g. pressure signals from transducers in outriggers connected to the crane's base frame. In such embodiment, an actual bending may thus be calculated using a predetermined bending characteristic obtained during a calibration. Such a predetermined bending characteristic can e.g. take the form of a bending model (describing the bending as a function of the load and/or load position).

In an embodiment, the bending characteristic of other components of the crane (such as a frame or the outriggers such as the outriggers 210, 220, 230 in Figure 3) may also be taken into account in the model. In such arrangement, a more extended model may be applied whereby a position of outriggers can be taken into account as well. In order to obtain such model, the calibration procedure to determine the bending characteristic may e.g. involve determining a displacement of the load (due to the bending of the crane boom or the crane frame or the outriggers, or a combination thereof) for different setups of the crane, e.g. having the outriggers in different positions.

Note that, as an alternative to a calibration process, a mechanical modeling of the crane or crane components (e.g. using finite element modeling) may also be used to determine a bending characteristic which may subsequently be used, during normal operating, to determine/estimate a bending of an actual load.

In an embodiment, the bending can be derived from measurements during the actual loading of the crane, e.g. using measurements from strain sensors or a loadcell mounted to the extendable arm.

As an alternative, the bending can be derived from measurements of the load on the arm or boom. The load of the arm can e.g. be determined on the pressure and length of an hydraulic cylinder used in positioning the boom. Combined with a measurement of the weight of the load (which could also be a known characteristic input via a user interface), the bending can be estimated / calculated.

Based on the determined or estimated bending of the crane boom, the base frame, the outriggers or a combination thereof, a desired positional adjustment of the crane boom (to at least partly compensate for the bending) can be determined and applied.

In accordance with the second aspect of the invention, the control unit is thus further arranged to control the drive unit to adjust the position of the extendable arm or lifting device to at least partly compensate the bending effect.

In an embodiment, the control unit can thus control the drive unit to adjust a vertical position of a lifting winch for compensating the vertical bending effect. In order to at least partly compensate for both a vertical and a horizontal effect of the bending, an adjustment of the extension and/or elevation angle of the crane boom can be applied by the drive unit.

In a preferred embodiment, the control unit of the mobile crane is arranged to only adjust an elevation of the extendable arm of the mobile crane for, at least partly, compensating the bending effect.

In order to adjust a position of the load (e.g. by an adjustment of the position of the crane boom), a drive unit according to the fifth aspect of the invention may advantageously applied since it enables an accurate position control, see further on.

In accordance with an embodiment of the present invention, the mobile crane comprises a wireless receiver for receiving a control signal for controlling the drive unit and providing the control signal to the drive unit. In such arrangement, the crane further comprises a remote control system, comprising:
i. a user interface for generating a set point representing a desired position or displacement of the load;
ii. a docking area for receiving a mobile processing device and in use, connecting the mobile processing device to the user interface to provide the set point to the mobile processing device,
wherein the remote control system is further arranged to, in use, provide the control signal to the receiver.

Such an arrangement is schematically shown in Figure 4a. Figure 4a schematically depicts the mobile crane of Figure 2 wherein the crane is provided with a receiver 410, e.g. connected to the base frame 110. In use, the receiver 410 can receive a control signal for controlling the drive unit. The mobile crane according to the third aspect of the invention further comprises a remote control system 450 comprising a user interface 460 and a docking area 470 for receiving a mobile processing device. In accordance with the invention, the docking area can e.g. be adapted to receive a mobile processing device such as a portable computer or the like, thereby providing a connection between the user interface 460 of the remote control system 450 and an input port of the processing device. In such arrangement, the user interface 470, e.g. comprising one or more joy-sticks or handles or rotatable knobs, can be applied by the operator to provide a position- or velocity- or displacement- or movement set point to the portable computer, in general the mobile processing device, whereupon the portable computer can process the set point, e.g. convert it to a control signal for the drive unit of the mobile crane. In an embodiment, the control signal may subsequently be transmitted to a receiver of the mobile crane using a transmitter available on the portable computer. The control signal as received may subsequently be converted by the drive unit (e.g. a drive unit of a mobile crane according to the fourth aspect of the invention) to a desired displacement or velocity of the crane or a component thereof. The transmission may be realized using any available wireless communication on the mobile processing device, such as Bluetooth. In an embodiment, the receiver 410 is a transceiver, the transceiver being arranged to, in use, transmit a signal representing an operating characteristic of the mobile crane to the remote control system 450. As such, characteristic information obtained from sensors of the crane, e.g. pressure sensors or strain sensors or position sensors, can be fed back to the remote control system 450 whereupon the information can be provided to the mobile processing device via the docking area. As such, the mobile processing device can be arranged to receive the signal and display the operating characteristic on a display of the mobile processing device.

In an embodiment, a feedback signal as received from the transceiver can be used by the mobile processing device to control the user interface. As an example, a response of the crane to a control signal, e.g. the start of an extension of the crane boom can be used to generate a tactile signal of a component of the user interface such as a joystick. Such a tactile signal can e.g. be a single pulsed displacement of the joystick. As such, the operator of the user interface is made aware of the crane's response. A control program for controlling the user interface in such manner can e.g. be residing on the mobile processing device, e.g. the portable computer.

As such, the mobile crane according to the embodiment of the invention can be controlled by software available on the mobile processing device, e.g. an industrial PC. As such, the remote control system and receiver of the mobile crane according to the third aspect of the invention can be considered a generic interface for controlling a crane by a mobile processing device such as a portable PC or PDA. A control program can e.g. be loaded on the portable PC whereupon the PC is docked to the docking area of the remote control system 450 and the crane can be controlled by the user interface 460 providing input to the portable PC, in general the mobile processing device.

As such, the remote control system and receiver can be shared to control different types of cranes whereas the actual control of a particular type of crane can be described by a software program which can be loaded into a portable PC. As such, it may also be made more easy to provide an upgrade of the control program. A further advantage of the control system of the mobile crane according to the embodiment of the invention applying a transceiver, is than any feedback received from the crane during operation from the transceiver can be processed or analyzed afterwards on the mobile processing device. Such analysis can e.g. be useful for maintenance purposes or diagnostics of the crane.

In accordance with the embodiment of the present invention, docking area is used to denote a designated area on the remote control system to which a mobile processing device such as an industrial PC, a laptop, a PDA or the like can be mounted. As such, the docking area can be provided with mounting or securing means such as clamps to securely mount the mobile processing device to the docking area. Preferable, the mobile processing device is detachably mountable to the docking area.

In an embodiment, the docking area can be provided with a transparent cover to cover the mobile processing device when mounted to the docking area, in order to shield the mobile processing device from humidity or pollution such as dust or dirt. In order to control an operation of the crane, using the user interface of the remote control system, the mobile processing device can be connected to the user interface, for receiving a desired set point.

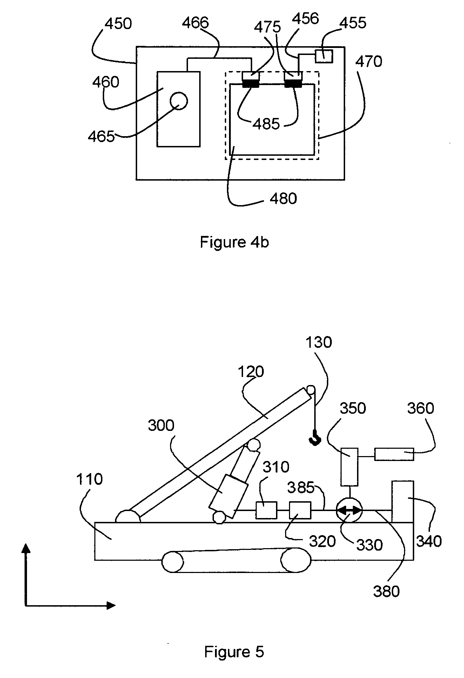

Figure 4b schematically shows a first manner to realize the connection between the mobile processing device and the user interface when the mobile processing device is mounted to the docking area. In Figure 4b, the remote control system 450 is schematically shown including the user interface 460 and the docking area 470. Figure 4b further shows a mobile processing device 480 mounted to the docking area 470. Note that, in an embodiment, the docking area 470 can comprise a recessed area to which the mobile processing device 480 can be inserted or partly inserted. In the embodiment as shown, the mobile processing device 480 comprises two terminals 485 that connect to corresponding terminals 475 of the docking area. Such terminals can e.g. include a data communication port such as USB ports or the like. In the embodiment as shown, the connection between the corresponding terminals 475 and 485 is realized when the mobile processing device is mounted to the docking area, in a similar manner as when docking of a laptop or notebook to a docking station. When connected, a set point signal as generated by a control element 465 of the user interface 460 (the control element e.g. being a joystick) can be provided via connection 466 and the connected terminals 475 / 485 to the mobile communication device.

A second manner to provide a connection between the remote processing device and the user interface is by providing coupling elements such as cables. In such arrangement, the remote processing device is mounted to the docking area, where after cables or connectors are used to provide the appropriate connections. In such an arrangement, a connection between the remote processing device and the user interface can be made, substantially independent of a position of terminals of the remote processing device relative to a position of terminals on the user interface.

When the mobile processing device 480 receives the set point signal, it can process the signal and convert it to control signal for controlling the mobile crane. In order to do so, the mobile processing device 480 can e.g. make use of software installed on the device or software accessible by the device; e.g. via an wireless internet connection. The remote control system according to the invention is arranged to provide the control signal to a receiver, e.g. a wireless receiver mounted to the crane. In order to provide the control signal to the receiver of the crane and thus to the drive unit of the crane, the mobile control device can be provided with a transmitter for transmitting the control signal. As an alternative, the remote control system can be provided with a transmitter 455 (see Figure 4b) for transmitting the control signal to the receiver of the crane. In such embodiment, the one of the terminals 485 of the mobile processing device can provide the control signal, via connection 456 to the transmitter 455.

As mentioned, the remote control system 450 according to the embodiment of the invention may facilitate in gathering diagnostic information, by applying a transceiver 410 on the crane which is, during use, communicatively connected with the mobile processing device 480, via the docking area. In such arrangement, the following feedback can e.g. be provided to the mobile processing unit:
- operation time, i.e. hours of operation,
- load, overall load, peak loads handled,
- energy consumption, energy supply,
- temperature readings of various components of the crane,
- error notifications enabling diagnose of malfunctions (such notifications may e.g. be diagnosed and solved via an internet connection of the mobile processing device with a service centre)
Feedback on the operating time may e.g. be useful in case the crane is rented or leased.

In an embodiment, the remote control system can be arranged to control two or more crane simultaneously. In such arrangement, the control program or software need not be available on each of the cranes operated, as the cranes can be provided with a control signal by control software available on or accessible by the mobile processing device. In an embodiment, the control signal as generated by the mobile processing device is identical for each of the two or more cranes, thereby enabling the cranes to operate synchronously. Alternatively, each crane can be provided with a dedicated control signal, allowing the cranes to operate in a different manner. Note that in such case, the remote control system thus provides control signals to each of the two or more cranes. As such, each control signal transmitted should include or be accompanied by an identifier of the crane for which the control signal is intended.

In a preferred embodiment, the remote control system is applied to generate a control signal for the drive unit of the crane. In such embodiment, the control signal as received by the receiver 410 can e.g. be applied by the control unit 360 of the hydraulic motor/pump 330 to control e.g. an hydraulic cylinder 300, (see Figure 5). In general, the control signal as received by receiver can be provided by a control system mounted on the crane which converts the received control signal to drive signals for e.g. the motors, pumps or valves on the crane, such control system e.g. comprising a PLC controller or PLC control units. The remote control system of the mobile crane according to the embodiment of the invention further facilitates an adjustment of the control or operation of the user interface depending on the tooling of the crane. Depending on the type of tooling of the crane, e.g. a winch, manipulator, gripper, pallet fork or other, the control characteristics, such as functionality or sensitivity or the user interface 460, may need to be adjusted. Since the conversion of a set point or, in general, a signal representing a user operation of the user interface, to the control signal controlling the crane is performed by the mobile processing device, different control characteristics can be pre-programmed and e.g. made available to the operator prior to operation, e.g. via a menu displayed on a display of the mobile processing device. Alternatively, a signal providing an identification of the crane or type or crane can be provided to the remote control system (e.g. via a transceiver of the crane) enabling the mobile processing device select the appropriate control software or algorithms or the like to control the identified crane.

The remote control system further facilitates an adjustment of the operation/control to a particular operator.

The control of the crane by the remote control system including a mobile processing device may e.g. require an identification of the operator, prior to operating the crane; the mobile processing device may e.g. be password-protected or may require a log-on by the operator. As such, the operation of the crane can be made user-specific, e.g. specifying sensitivity of the user interface or the language applied when feedback is provided on a display of the mobile processing device. User-specific operation may also include disabling or limiting certain operations to a user, e.g. depending on experience or certificates of the operating. Such limitations can e.g. involve limitations with respect to operating velocity or allowable load.

The use of a mobile processing device such as a notebook or PDA may further facilitate communication between operators of different cranes, remote monitoring, etc... using the internet functionality of the mobile processing device.

In accordance with the invention, the drive unit comprises a hydraulic proportional volume control for controlling a position or velocity of the extendable arm, the hydraulic control applies a non-proportional valve connected to an hydraulic pump wherein the hydraulic pump has a fixed displacement and is driven by an rpm-controlled electromotor for controlling a pumped volume to obtain the proportional volume control. In such arrangement, the hydraulic pump should preferably have a known stroke-volume or displacement per revolution. As such, the hydraulic pump is preferably non-adjustable with respect to the volume of the stroke. An adjustable pump could however be applied, provided the adjustment can be controlled or measured by a control unit, e.g. a PLC. In this respect, it is worth noting that such proportional volume control as proposed cannot be realized using a conventional adjustable pump control, e.g. based on load-sensing or constant pressure, as in such control, the actual flow is not predictable, which would thus require a proportional valve. As such, using the proposed approach, i.e. using an rpm-controlled electromotor for controlling a non-adjustable hydraulic pump enables to realize a proportional volume control using simple and robust components such as non-proportional valves.

In order to control different components of the mobile crane hydraulically using a proportional volume control, each component can be provided with each own hydraulic pump.

In Figure 5, an example of a crane comprising a drive unit according to the invention is schematically shown. As shown, a crane boom 120 can be operated by an hydraulic cylinder 300 (e.g. connected between the crane boom 120 and the base frame 110) which is controlled by an hydraulic proportional volume control. The hydraulic cylinder can e.g. be provided with a pressure sensor 310 or any other type of force measurement. The hydraulic cylinder 300 is connected, via oil-tubes, to a hydraulic motor/pump 330, which is, as indicated above, preferable non-adjustable with respect to the volume of the stroke. The hydraulic motor/pump 330 is connected to the hydraulic cylinder 300 via a valve 320, which can be an electronically controllable valve. The hydraulic motor/pump 330 is, in the embodiment shown, further connected to an oil reservoir 340. As an alternative, the further connection 380 (between the pump and the oil reservoir 340) can also be connected an opposing side of the hydraulic cylinder 300, resulting in a closed circuit. Such a closed circuit can be applied in case a volume change on one side of the cylinder (e.g. connected to the pump via connection 385) results in a substantially equal but opposite volume change on the opposite side of the cylinder. In accordance with the invention, the hydraulic motor/pump 330 is driven by an rpm-controlled electromotor 350. In an embodiment, a synchronous electromotor is applied such as a permanent magnet motor. Such a motor enables an accurate control of both displacement and force, even at zero rpm. Preferable, a so-called servomotor including a position measurement and control unit is applied to drive the hydraulic pump/motor 330. In Figure 5, item 360 therefore denotes the control unit of the motor, e.g. comprising a PLC controller or control unit. Such control unit can e.g. be build-in in the motor housing. The proportional volume control as applied in the invention enables an accurate predictable displacement of the crane boom or other crane part, because the displacement is proportional to the controlled rotation of the rpm-controlled electromotor, substantially independent of the load or pressure. This facilitates a pro-active control of the displacement, which does not require a control adjustment of a proportional valve, e.g. based on a measured or observed displacement.

Using the described arrangement, a volume flow that is proportional to the rotational speed of the electromotor can be realized.

In the arrangement as schematically depicted, the hydraulic motor/pump 330 may be operated to drive the hydraulic cylinder 330 (operating as a pump) or can be operated as a motor to drive the electromotor 350 (then operating as a generator). In the latter case, the oil pressure is converted to a rotation of the electromotor 350. By doing so, electrical energy is generated, whereby, using the same control unit 360, the rotation of the electromotor 350 is controlled, e.g. enabling a controlled lowering movement of a load (or the crane boom) while at the same time, recovering electrical energy. The recovered electrical energy can e.g. be stored in a battery, or fed to an electrical grid, or dissipated in e.g. a resistor. Compared to a conventional proportional valve control, heating of the oil, (e.g. caused by an operation of a proportional valve partially cutting-off an oil flow) can be avoided or mitigated, resulting in a reduced need of cooling means to cool the oil.

In order to avoid an unwanted movement or displacement of the load during the opening of the valve 320, the pump can be arranged to provide substantially the same pressure on both sides of the valve, whereby the pressure in the oil tube between the valve 320 and the hydraulic cylinder 300 can be measured by the sensor 310 or derived from a load situation. The pressure on the pump side of the valve 320 can e.g. be derived from a power consumption of the electromotor, e.g. determined by the control unit 360.

Various aspects for improving the control of a mobile crane have been discussed above. As will be understood, although the various aspects can be applied independently, they can advantageously be combined. In this respect it is worth mentioning that a feedback signal to e.g. the control unit of the mobile crane may be used for more than one purpose. As an example, a pressure or force sensor in an outrigger may provide a signal that is useful in determining the center of gravity but may also provide and indication of the load position which can be useful in determining a strain and thus a bending of the crane boom or extendable arm or an outrigger.

Further, although the various aspects have been described with respect to a mobile crane, the various aspects can also be implemented elsewhere. As an example, the lifting device as mentioned may be replaced by a gripper or an interface for a gripper.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

## Claims

1. A mobile crane (100) comprising:
a. a base frame (110);
b. an extendable arm (120) that is connected to the base frame (110);
c. a lifting device (130), such as a lifting winch, connected to the extendable arm (120) for lifting a load;
d. a drive unit (140) for positioning the extendable arm (120) and lifting device (130) thereby positioning the load, **characterized in that** the drive unit (140) comprises a hydraulic proportional volume control for controlling a position or velocity of the extendable arm (120), the hydraulic control applies a non-proportional valve (320) connected to an hydraulic pump (330) wherein the hydraulic pump (330) has a fixed displacement and is driven by an rpm-controlled electromotor (350) for controlling a pumped volume to obtain the proportional volume control.

2. The mobile crane according to claim 1, further comprising an hydraulic cylinder (300) connected between the base and the extendable arm (120) for positioning the extendable arm (120), a displacement of hydraulic cylinder (300) being controlled by the hydraulic proportional volume control.

3. The mobile crane according to claim 1 or 2 wherein the rpm-controlled electromotor (350) is a servomotor.

4. The mobile crane according to any preceding claim wherein the rpm-controlled electromotor (350) is a permanent magnet synchronous motor.

5. The mobile crane according to any preceding claim, further comprising at least three outriggers (210, 220, 230) connected to the base frame (110).

6. The mobile crane according to claim 5 wherein the outriggers (210, 220, 230) are provided with pressure transducers or force- or strain sensors for, in use, providing a resp. pressure or force signal representing the resp. pressure or force on the outriggers to a control unit of the mobile crane.

7. The mobile crane according to any preceding claim, further comprising a wireless receiver (410) for receiving a control signal for controlling the drive unit (140) and providing the control signal to the drive unit (140); and
- a remote control system (450) comprising:
i. a user interface (460) for generating a set point representing a desired position or displacement of the load;
ii. a docking area (470) for receiving a mobile processing device (480) and in use, connecting the mobile processing device to the user interface to provide the set point to the mobile processing device,
wherein the remote control system (450) is further arranged to, in use, provide the control signal to the receiver.

8. The mobile crane according to claim 7 wherein the mobile processing device (480) comprises a control unit for converting the set point to the control signal.

9. The mobile crane according to claim 7 wherein the mobile processing device (480) further comprises a transmitter for in use, transmitting the control signal to the receiver.

10. The mobile crane according to any of the claims 7 to 9, further comprising the mobile processing device (480).

11. The mobile crane according to any of the claims 7 to 10 wherein the mobile processing device (480) comprises a portable computer, an industrial PC or a PDA.

12. The mobile crane according to any of the claims 7 to 11 wherein the receiver (410) is a transceiver, the transceiver being arranged to, in use, transmit a signal representing an operating characteristic of the mobile crane to the remote control system, the mobile processing device (480) being arranged to receive the signal and display the operating characteristic on a display of the mobile processing device.

13. The mobile crane according to any preceding claim, further comprising a control unit arranged to in use:
i. determine a bending of the extendable arm (120), the base frame (110) or an outrigger (210, 220, 230) of the crane, or a combination thereof;
ii. control the drive unit (140) to adjust a position of the extendable arm (110) or lifting device (130) in order to at least partly compensate for a displacement of the load due to the bending.

14. The mobile crane according to claim 13 wherein the control unit is arranged to determine the bending based on a predetermined bending characteristic of the arm (120), the base frame (110) or the outrigger (210, 220, 230), or a combination thereof.

15. The mobile crane according to any of the claim 13 to 14 wherein the mobile crane further comprises one or more strain sensors for in use providing a strain signal representing a strain of the extendable arm (120), the control unit being arranged to determine the bending of the extendable arm (120) based on the strain signal.

## Patentansprüche

1. Mobiler Kran (100) umfassend:
a. einen Basisrahmen (110);
b. einen ausfahrbaren Arm (120), der mit dem Basisrahmen (110) verbunden ist;
c. eine Hebevorrichtung (130), wie z.B. eine Hebewinde, die zum Heben einer Last mit dem ausfahrbaren Arm (120) verbunden ist;
d. eine Antriebseinheit (140) zum Positionieren des ausfahrbaren Arms (120) und der Hebevorrichtung (130) und somit zum Positionieren der Last, **dadurch gekennzeichnet, dass** die Antriebseinheit (140) eine proportionale hydraulische Volumensteuerung zum Steuern einer Position oder Geschwindigkeit des ausfahrbaren Arms (120) umfasst, wobei die hydraulische Steuerung ein nicht-proportionales Ventil (320), das mit einer Hydraulikpumpe (330) verbunden ist, nutzt, wobei die Hydraulikpumpe (330) einen konstanten Förderstrom aufweist und durch einen drehzahlgesteuerten Elektromotor (350) zum Steuern eines Fördervolumens angetrieben wird, um die proportionale Volumensteuerung zu erreichen.

2. Mobiler Kran nach Anspruch 1, weiterhin umfassend einen Hydraulikzylinder (300), der zwischen der Basis und dem ausfahrbaren Arm (120) zur Positionierung des ausfahrbaren Arms (120) verbunden ist, wobei ein Förderstrom des Hydraulikzylinders (300) durch die proportionale hydraulische Volumensteuerung gesteuert ist.

3. Mobiler Kran nach Anspruch 1 oder 2, wobei der drehzahlgesteuerte Elektromotor (350) ein Servomotor ist.

4. Mobiler Kran nach einem der vorhergehenden Ansprüche, wobei der drehzahlgesteuerte Elektromotor (350) ein dauermagneterregter Synchronmotor ist.

5. Mobiler Kran nach einem der vorhergehenden Ansprüche, weiterhin umfassend mindestens drei Ausleger (210, 220, 230), die mit dem Basisrahmen (110) verbunden sind.

6. Mobiler Kran nach Anspruch 5, wobei die Ausleger (210, 220, 230) Druckaufnehmer oder Kraft- oder Verformungssensoren aufweisen, zum, in Verwendung, Abgeben eines jeweiligen Druck- oder Kraftsignals, das dem jeweiligen Druck oder der Kraft an den Auslegern entspricht, an eine Steuereinheit des mobilen Krans.

7. Mobiler Kran nach einem der vorhergehenden Ansprüche, weiterhin umfassend einen drahtlosen Empfänger (410) zum Empfangen eines Steuersignals zum Steuern der Antriebseinheit (140) und Abgeben des Steuersignals an die Antriebseinheit (140); und
- ein Fernsteuersystem (450) umfassend:
i. eine Benutzeroberfläche (460) zum Erzeugen eines Sollwertes, der einer gewünschten Position oder Verlagerung der Last entspricht;
ii. einen Andockbereich (470) zur Aufnahme einer mobilen Verarbeitungsvorrichtung (480) und, in Verwendung, zum Verbinden der mobilen Verarbeitungsvorrichtung mit der Benutzeroberfläche, um den Sollwert an die mobile Verarbeitungsvorrichtung abzugeben,
wobei das Fernsteuersystem (450) weiterhin angeordnet ist, um, in Verwendung, das Steuersignal an den Empfänger abzugeben.

8. Mobiler Kran nach Anspruch 7, wobei die mobile Verarbeitungsvorrichtung (480) eine Steuereinheit zum Umwandeln des Sollwerts in das Steuersignal umfasst.

9. Mobiler Kran nach Anspruch 7, wobei die mobile Verarbeitungsvorrichtung (480) weiterhin einen Sender zum, in Verwendung, Senden des Steuersignals an den Empfänger umfasst.

10. Mobiler Kran nach einem der Ansprüche 7 bis 9, weiterhin umfassend die mobile Verarbeitungsvorrichtung (480).

11. Mobiler Kran nach einem der Ansprüche 7 bis 10, wobei die mobile Verarbeitungsvorrichtung (480) einen tragbaren Computer, einen Industrie-PC oder ein PDA umfasst.

12. Mobiler Kran nach einem der Ansprüche 7 bis 11, wobei der Empfänger (410) ein Sende-/Empfangsgerät ist, wobei das Sende-/Empfangsgerät angeordnet ist, um, in Verwendung, ein Signal, das einem Betriebsparameter des mobilen Krans entspricht, an das Fernsteuersystem zu senden, wobei die mobile Verarbeitungsvorrichtung (480) angeordnet ist, um das Signal zu empfangen und den Betriebsparameter auf einem Bildschirm der mobilen Verarbeitungsvorrichtung anzuzeigen.

13. Mobiler Kran nach einem der vorhergehenden Ansprüche, weiterhin umfassend eine Steuereinheit, die angeordnet ist, um in Verwendung:
i. eine Biegung des ausfahrbaren Arms (120), des Basisrahmens (110) oder eines Auslegers (210, 220, 230) des Krans, oder einer Kombination daraus zu bestimmen;
ii. die Antriebseinheit (140) zu steuern, um die Position des ausfahrbaren Arms (110) oder der Hebevorrichtung (130) anzupassen, um zumindest teilweise eine Verlagerung der Last durch die Biegung auszugleichen.

14. Mobiler Kran nach Anspruch 13, wobei die Steuereinheit angeordnet ist, um die Biegung basierend auf einem vorbestimmten Biegungsparameter des Arms (120), des Basisrahmens (110) oder des Auslegers (210, 220, 230), oder einer Kombination daraus zu bestimmen.

15. Mobiler Kran nach einem der Ansprüche 13 bis 14, wobei der mobile Kran weiterhin einen oder mehrere Verformungssensoren umfasst, zur, in Verwendung, Abgabe eines Verformungssignals, das einer Verformung des ausfahrbaren Arms (120) entspricht, wobei die Steuereinheit angeordnet ist, um die Biegung des ausfahrbaren Arms (120) basierend auf dem Verformungssignal zu bestimmen.

## Revendications

1. Grue mobile (100) comprenant:
a. un châssis de base (110);
b. un bras extensible (120) qui est raccordé au châssis de base (110);
c. un dispositif de levage (130), tel qu'un treuil de levage, raccordé au bras extensible (120) pour lever une charge;
d. une unité d'entraînement (140) pour positionner le bras extensible (120) et le dispositif de levage (130) positionnant ainsi la charge, **caractérisée en ce que** l'unité d'entraînement (140) comprend une commande hydraulique de volume proportionnel pour commander une position ou vitesse du bras extensible (120), la commande hydraulique utilise une valve non proportionnelle (320) raccordée à une pompe hydraulique (330), dans laquelle la pompe hydraulique (330) a un déplacement fixe et est entraînée par un moteur électrique commandé par sa vitesse de rotation par minute (350) afin de commander un volume pompé pour obtenir la commande de volume proportionnel.

2. Grue mobile selon la revendication 1, comprenant en outre un vérin hydraulique (300) raccordé entre la base et le bras extensible (120) pour positionner le bras extensible (120), un déplacement du vérin hydraulique (300) étant commandé par la commande hydraulique de volume proportionnel.

3. Grue mobile selon la revendication 1 ou 2, dans laquelle le moteur électrique commandé par sa vitesse de rotation par minute (350) est un servomoteur.

4. Grue mobile selon l'une quelconque des revendications précédentes, dans lequel le moteur électrique commandé par sa vitesse de rotation par minute (350) est un moteur synchrone à aimant permanent.

5. Grue mobile selon l'une quelconque des revendications précédentes, comprenant en outre au moins trois stabilisateurs (210, 220, 230) raccordés au châssis de base (110).

6. Grue mobile selon la revendication 5, dans laquelle les stabilisateurs (210, 220, 230) sont prévus avec des transducteurs de pression ou des capteurs de force ou déformation, pour fournir, à l'usage, un signal sensible à la pression ou à la force représentant la pression ou force sensible sur les stabilisateurs par rapport à une unité de commande de la grue mobile.

7. Grue mobile selon l'une quelconque des revendications précédentes, comprenant en outre un récepteur sans fil (410) pour recevoir un signal de commande afin de commander l'unité d'entraînement (140) et fournir le signal de commande à l'unité d'entraînement (140); et
un système de commande à distance (450) comprenant:
i. une interface utilisateur (460) pour générer un point de consigne représentant une position souhaitée ou déplacement souhaité de la charge;
ii. une zone d'amarrage (470) pour recevoir un dispositif de traitement mobile (480) et à l'usage, raccorder le dispositif de traitement mobile à l'interface utilisateur afin de fournir le point de consigne au dispositif de traitement mobile,
dans laquelle le système de commande à distance (450) est agencé, en outre, pour fournir, à l'usage, le signal de commande au récepteur.

8. Grue mobile selon la revendication 7, dans laquelle le dispositif de traitement mobile (480) comprend une unité de commande pour convertir le point de consigne en signal de commande.

9. Grue mobile selon la revendication 7, dans laquelle le dispositif de traitement mobile (480) comprend en outre un émetteur, pour transmettre, à l'usage, le signal de commande au récepteur.

10. Grue mobile selon l'une quelconque des revendications 7 à 9, comprenant en outre le dispositif de traitement mobile (480).

11. Grue mobile selon l'une quelconque des revendications 7 à 10, dans laquelle le dispositif de traitement mobile (480) comprend un ordinateur portable, un PC industriel ou un PDA.

12. Grue mobile selon l'une quelconque des revendications 7 à 11, dans laquelle le récepteur (410) est un émetteur-récepteur, l'émetteur-récepteur étant agencé pour transmettre, à l'usage, un signal représentant une caractéristique opérationnelle de la grue mobile, au système de commande à distance, le dispositif de traitement mobile (480) étant agencé pour recevoir le signal et afficher la caractéristique opérationnelle sur un écran du dispositif de traitement mobile.

13. Grue mobile selon l'une quelconque des revendications précédentes, comprenant en outre une unité de commande agencée, à l'usage, pour:
i. déterminer une flexion du bras extensible (120), du châssis de base (110) ou d'un stabilisateur (210, 220, 230) de la grue ou d'une combinaison de ces derniers;
ii. commander l'unité d'entraînement (140) pour ajuster une position du bras extensible (110) ou du dispositif de levage (130) afin de compenser au moins partiellement un déplacement de la charge dû à la flexion.

14. Grue mobile selon la revendication 13, dans laquelle l'unité de commande est agencée pour déterminer la flexion en fonction d'une caractéristique de flexion prédéterminée du bras (120), du châssis de base (110) ou du stabilisateur (210, 220, 230) ou de leur combinaison.

15. Grue mobile selon l'une quelconque des revendications 13 à 14, dans laquelle la grue mobile comprend en outre un ou plusieurs capteurs de déformation pour fournir, à l'usage, un signal de déformation représentant une déformation du bras extensible (120), l'unité de commande étant agencée pour déterminer la flexion du bras extensible (120) en fonction du signal de déformation.
